# EUROPEAN PATENT APPLICATION

(11) **EP 4 603 799 A2**
(43) Date of publication of application: **20.08.2025**
(21) Application number: 24216200.6
(22) Date of filing: 28.11.2024
(51) Int. Cl.: G01C 19/58

(54) **PHASE DIFFERENCE MEASURING METHOD, ATOMIC WAVE INTERFEROMETER, ANGULAR VELOCITY MEASURING METHOD, AND ATOMIC WAVE INTERFEROMETER TYPE GYROSCOPE**

(30) Priority: 29.01.2024 JP 2024010746
(71) Applicant: Institute of Science Tokyo, Tokyo 152-8550 (JP); Japan Aviation Electronics Industry, Limited, Tokyo 150-0043 (JP)
(72) Inventor: KAWASAKI, Takuya, Tokyo, 152-8550 (JP); OTABE, Sotatsu, Tokyo, 152-8550 (JP); NISHIMURA, Naoki, Tokyo, 152-8550 (JP); SATO, Tomoya, Tokyo, 152-8550 (JP); MIRANDA, Martin Santiago, Tokyo, 152-8550 (JP); TAKEI, Nobuyuki, Tokyo, 152-8550 (JP); KOZUMA, Mikio, Tokyo, 152-8550 (JP); HOSOYA, Toshiyuki, Tokyo, 150-0043 (JP); TANAKA, Atsushi, Tokyo, 150-0043 (JP)
(74) Representative: MERH-IP Matias Erny Reichl Hoffmann Patentanwälte PartG mbB

(57) **Abstract**

Although phase signal extraction of an interfered atomic wave by the lock-in detection is an excellent measuring method, further improvement is awaited in the phase signal extraction method for the atomic wave interferometer. A phase difference measuring method solving the aforementioned problem uses an atomic wave interferometer that separates an atomic wave by a first Raman beam, reflects the atomic wave by a second Raman beam, and separates again the atomic wave by a third Raman beam to make the atomic wave interfere. The method applies to the second Raman beam an offset phase and an oscillation phase having an amplitude β and an angular frequency ω to modulate a phase of the atomic wave. A number-of-atoms measuring apparatus measures an intensity signal I of an interfered atomic wave. An observed phase difference Φ is calculated from a ω component and a 2ω component of the intensity signal I and the amplitude β. The offset phase is subtracted from the observed phase difference Φ to calculate a measured phase difference. Feedback control is conducted for the offset phase such that cosΦ = -1.

## Description

### TECHNICAL FIELD

The present disclosure relates to a Mach-Zehnder atomic wave interferometer using an atomic beam, and its application to a gyroscope.

### BACKGROUND ART

### [Wave Interference]

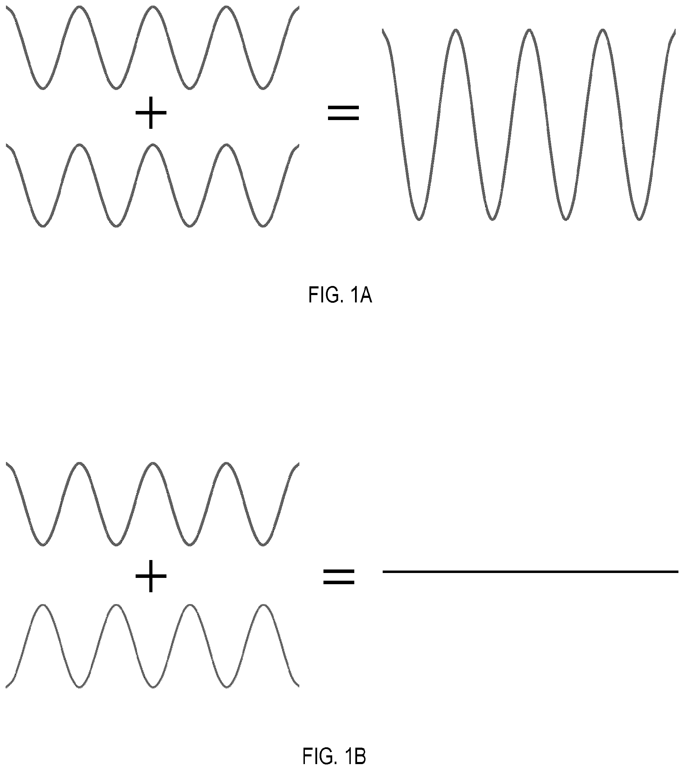

Wave interference is described with reference to FIG. 1.
FIG. 1A shows two waves with matching tops and bottoms being superimposed and intensifying each other.
FIG. 1B shows two waves with opposite tops and bottoms being superimposed and canceling each other.

As described above, constructive interference or destructive interference occurs as timings (phases) of the waves vary. This is referred to as "wave interference". A device that can measure a phase difference with high precision from intensity of superimposed waves is called an interferometer.

### [Laser Interferometer Type Gyroscope]

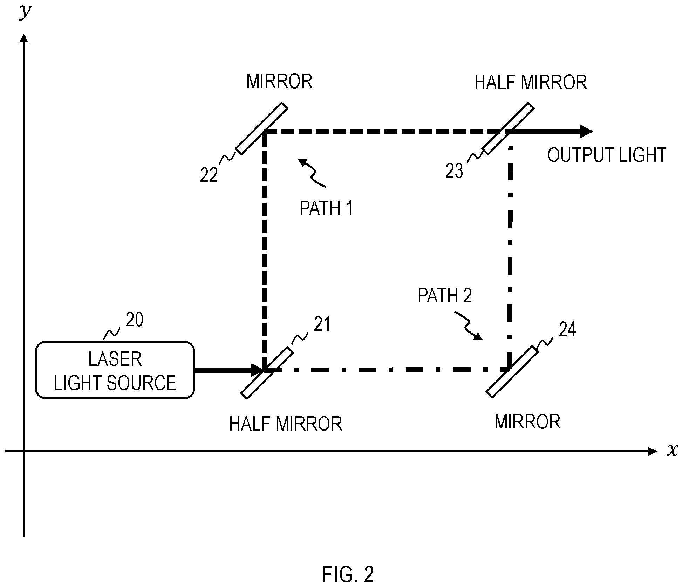

A laser interferometer type gyroscope is described with reference to FIG. 2. Note that a gyroscope is a device for measuring angular velocity and can detect rotation of an interferometer on an x-y plane in FIG. 2.

Assume that an output of a laser light source is given by formula (1): ${E}_{0} cos ω t$ where E₀ represents an amplitude of light, ω represents an angular frequency of light and t represents time

For convenience, the light is assumed to be equally divided by a half mirror 21. Assume that light output from a half mirror 23 through path 1 is given by formula (2), and light output from the half mirror 23 through path 2 is given by formula (3): ${E}_{1} = \frac{{E}_{0}}{2} cos \left(ωt+{ϕ}_{1}\right)$ ${E}_{2} = \frac{{E}_{0}}{2} cos \left(ωt+{ϕ}_{2}\right)$ where ϕ₁ and ϕ₂ represent phase changes by lengths of the path 1 and the path 2. The output light is as follows. ${E}_{1} + {E}_{2} = {E}_{0} \left(cos\left(ωt+\frac{{ϕ}_{1} + {ϕ}_{2}}{2}\right)cos\frac{Δ ϕ}{2}\right)$ where, Δϕ=ϕ₁ - ϕ₂. Envelope intensity Iₑₙᵥ of formula (4) is as follows. ${I}_{env} = {\left({E}_{0} cos\frac{Δ ϕ}{2}\right)}^{2} = \frac{{E}_{0}^{2}}{2} \left(1+cos Δϕ\right)$ formula (5) shows that light output from the interferometer flickers according to the phase difference Δϕ between the path 1 and the path 2.

### [Sagnac Effect]

Consider that the path 1 and the path 2 are equal in length and the gyroscope is rotated within a plane where the light path lies (x-y plane). When the wavelength of light is λ, the velocity is c, an area of the interferometer is A, and the angular velocity of the rotation is Ω, the phase difference Δϕ observed by the interferometer is obtained by the following formula (Non-Patent Literature 1: T. L. Gustavson, PRECISION ROTATION SENSING USING ATOM INTERFEROMETRY, A DISSERTATION SUBMITTED TO THE DEPARTMENT OF PHYSICS AND THE COMMITTEE ON GRADUATE STUDIES OF STANFORD UNIVERSITY, 2000). $Δ ϕ = \frac{4 πA}{λc} Ω$

This phase difference is called a Sagnac phase. By measuring the intensity of light Iₑₙᵥ and using the formula (5) and formula (6), the angular velocity Ω can be calculated as follows. $Ω= \frac{λc}{4 πA} {cos}^{- 1} \left(\frac{2 {I}_{env}}{{E}_{0}^{2}}-1\right)$

### [Atomic Wave]

It is well known that sound and light exhibit wave characteristics. An atom also exhibits wave characteristics according to quantum mechanics. By substituting λ with a wavelength λ_{M} of a matter wave and c with a velocity v of an atom, formula (7) is satisfied also for an atomic wave.

With reference to formula (7), it can be found that when the value λc is smaller, resolution of the angular velocity Ω is higher. When λ = 500 nm (green light) as an example of a wavelength of light, with the light velocity c = 3 x 10⁸ m/s, the following is satisfied. $λc = 150 {m}^{2} / s$

When a mass of the atom is M and the velocity of the atom is v, the following is satisfied: $Mv = \frac{h}{{λ}_{M}} \to {λ}_{M} v = \frac{h}{M}$ where h is Planck constant (6.63 x 10⁻³⁴ Js).

With regard to a calcium atom (M = 6.66 x 10⁻²⁶ kg), h/M is calculated to be about 1 x 10⁻⁸ m²/s. That is, using an atomic wave instead of a laser beam can achieve a gyroscope higher in sensitivity by about 10 orders of magnitude.

### [Atomic Wave Interferometer]

By utilizing recoil of an atom by Raman scattering, a Mach-Zehnder interferometer using an atomic wave can be configured (Non-Patent Literature 1).

### < Raman scattering >

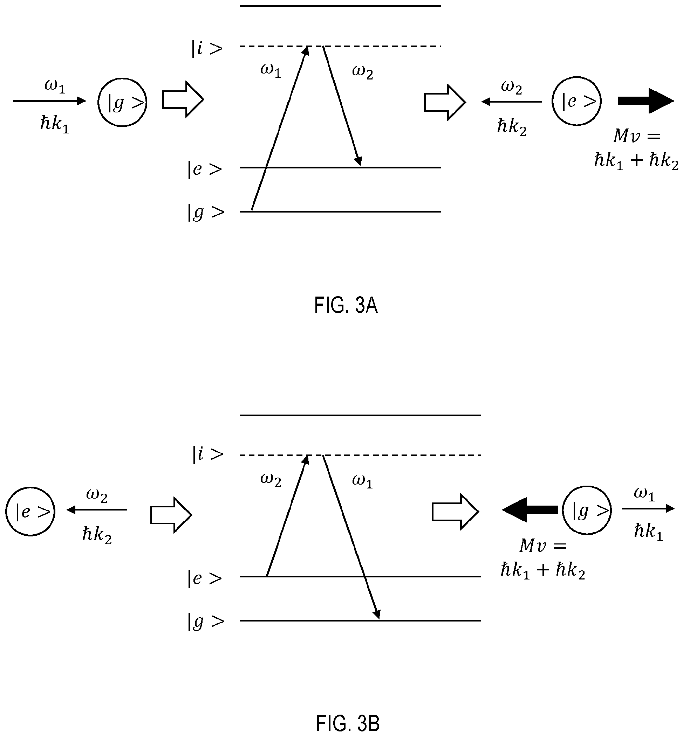

Raman scattering is inelastic collision of a photon and an atom. This is described with reference to FIG. 3.

FIG. 3A shows a process of an atom absorbing a photon of a frequency ω₁ and emitting a photon of a frequency ω₂ ((ω₁ > ω₂). As a result of the scattering, the atom acquires a momentum of (h/2π)(k₁ + k₂) = (h/2πc)(ω₁ + ω₂). Note that $ℏ = \frac{h}{2 π}$ is a so-called Dirac's constant, and referred to as (h/2π) herein except for formulae, due to the restrictions on notation.

FIG. 3B shows a process of an atom absorbing a photon of a frequency ω₂ and emitting a photon of a frequency ω₁ (ω₁ > ω₂). As a result of the scattering, the atom loses a momentum of (h/2π)(k₁ + k₂).

Hereinafter, a quantum-mechanical state of an atom generated by an atomic beam source is referred to as |g>, a quantum-mechanical state of an atom excited by Raman scattering and having acquired the momentum (h/2π)(k₁ + k₂) is referred to as |e>, and an imaginary level of Raman transition is referred to as |i>.

Transition probability from |g> to |e> or from |e> to |g> can be adjusted by an interaction time of the Raman beam and the atom (Non-Patent Literature 1).

### < Mach-Zehnder Interferometer >

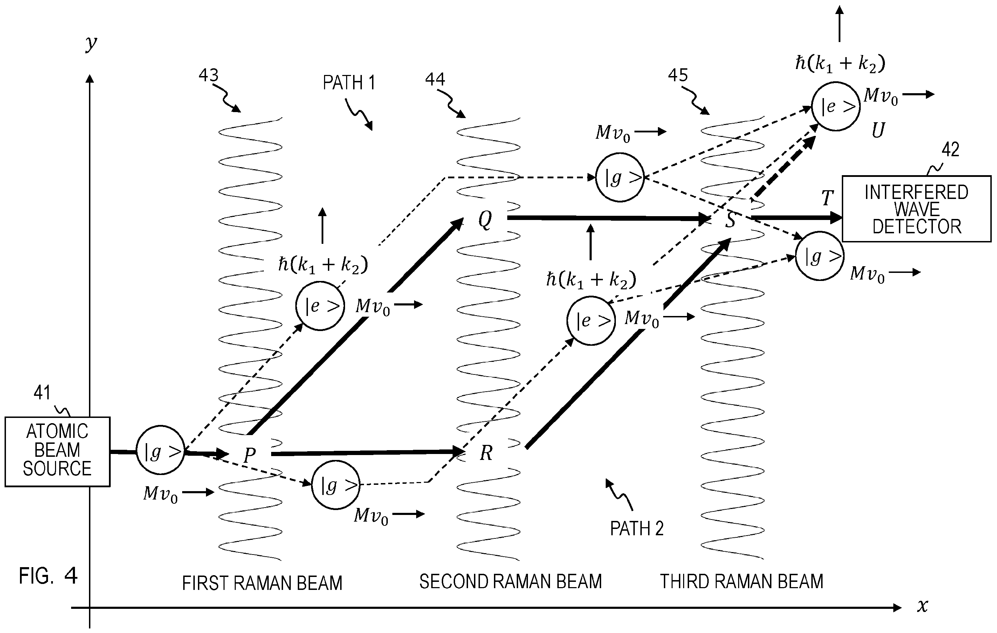

A Mach-Zehnder interferometer is configured by utilizing the above-described Raman scattering. This is described with reference to FIG. 4.

Three Raman beams are placed between an atomic beam source 41 and an interfered wave detector 42.

It is assumed that an atomic wave in the state |g> having a momentum Mv₀ in the x direction is supplied from the atomic beam source 41. Each Raman beam is formed of a laser beam of the frequency ω₁ and a laser beam of the frequency ω₂ facing each other.

A first Raman beam 43 transitions the atomic wave in the state |g> partially to the state |e>. The atomic wave having transitioned to the state |e> acquires the momentum (h/2π)(k₁ + k₂) in the y direction and advances from P to Q direction. The atomic wave remaining in the state |g> maintains the same momentum and advances from P to R direction. That is, the first Raman beam functions as an atomic wave splitter.

A second Raman beam 44 transitions the atomic wave in the state |e> totally to the state |g>. The second Raman beam 44 also transitions the atomic wave in the state |g> totally to the state |e>.

The atomic wave having transitioned to the state |g> loses the momentum (h/2π)(k₁ + k₂) in the y direction and advances from Q to S direction. The atomic wave having transitioned to the state |e> acquires the momentum (h/2π)(k₁ + k₂) in the y direction and advances from R to S direction. That is, the second Raman beam functions as a mirror for atomic wave.

In a similar manner to the first Raman beam, a third Raman beam 45 transitions the atomic wave in the state |g> partially to the state |e>. The third Raman beam 45 also transitions the atomic wave in the state |e> partially to the state |g>.

The atomic wave in the state |g> having advanced from Q to S direction partially advances from S to T direction, and the atomic wave in the state |e> having advanced from R to S direction partially transitions to the state |g> and advances from S to T direction, and superimposed atomic wave is detected by the interference wave detector 42.

Here, when phases obtained by the atomic wave by propagations PQS and PRS are ϕ₁ and ϕ₂, the state of the atomic wave having followed PQST is represented by $\frac{1}{2} {e}^{{iϕ}_{1}} \left|g\right〉$ while the state of the atomic wave having followed PRST is represented as follows. $\frac{1}{2} {e}^{{iϕ}_{2}} \left|g\right〉$

When the intensity of the input atomic wave is I₀, the intensity I_{T} detected in a position T is given as follows. ${I}_{T} = {I}_{0} {\left|\frac{1}{2}{e}^{{iϕ}_{1}}+\frac{1}{2}{e}^{{iϕ}_{1}}\right|}^{2} = \frac{{I}_{0}}{2} \left(1+cos \left({ϕ}_{1}-{ϕ}_{2}\right)\right)$ Note that the intensity I_{T} of the interfered wave can be measured by observation of fluorescence emitted by the atom.

### [Conventional Phase Signal Reading/Lock-in Detection]

If I_{T} can be measured, a phase difference generated in the atomic wave can be obtained by solving formula (13) as to ϕ₁ - ϕ₂. However, an amount of change of I_{T} is generally buried in noise and difficult to observe it directly.

In the Raman scattering, a phase of the atomic wave to be scattered can be controlled by a phase of the Raman beam. A technique leveraging the foregoing to measure the intensity of an interfered wave with high sensitivity by lock-in detection has been known (Non-Patent Literature 1).

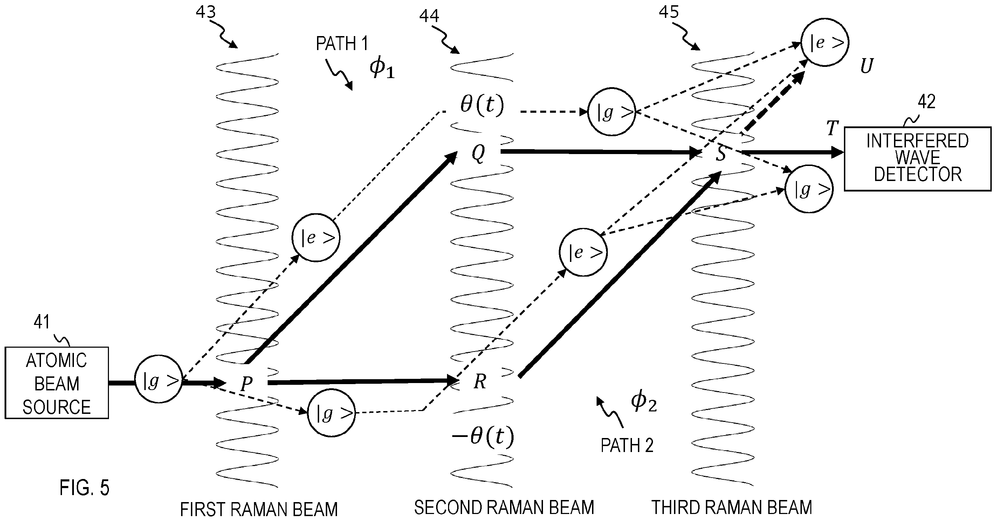

This is described with reference to FIG. 5. In the scattering by the second Raman beam, when a phase received by an atomic wave in the path 1 is θ (t) and a phase received by an atomic wave in the path 2 is -θ(t), the state of the atomic wave having followed PQST is represented as follows: $\frac{1}{2} {e}^{i \left({ϕ}_{1}+θ\left(t\right)\right)} \left|g\right〉$ while the state of the atomic wave having followed PRST is represented as follows. $\frac{1}{2} {e}^{i \left({ϕ}_{2}-θ\left(t\right)\right)} \left|g\right〉$ Given this, the intensity I_{T} of the atomic wave detected in the position T is obtained as follows. $\begin{matrix}{I}_{T} = {I}_{0} {\left|\frac{1}{2}{e}^{i \left({ϕ}_{1}+θ\left(t\right)\right)}+\frac{1}{2}{e}^{i \left({ϕ}_{2}-θ\left(t\right)\right)}\right|}^{2} \\ = \frac{{I}_{0}}{2} \left(1+cos\left({ϕ}_{1}-{ϕ}_{2}+2θ\left(t\right)\right)\right)\end{matrix}$

The phase of the atomic wave is swept by giving θ(t) = ωₛt. The intensity I_{S} of the atomic wave observed in the position T is as follows. ${I}_{S} = \frac{{I}_{0}}{2} \left(1+cos \left({ϕ}_{1}-{ϕ}_{2}+2{ω}_{s}t\right)\right)$ Lock-in detection by the frequency 2ωₛ gives the following. ${I}_{Lock} = Lo \left(cos 2{ω}_{s}t⋅{I}_{S}\right) = \frac{{I}_{0}}{4} cos \left({ϕ}_{1}-{ϕ}_{2}\right)$ Note that Lo (·) represents low pass filtering.

The lock-in detection permits detection of I_{Lock} with high sensitivity even if the interfered wave intensity signal is buried in noise. However, since I_{Lock} depends on the magnitude of I₀ as is obvious from formula (18), influence of intensity fluctuation and quantum fluctuation of the atomic wave is inevitable even by employing phase sweeping and the lock-in detection of the atomic wave.

### SUMMARY OF THE INVENTION

Although phase signal extraction from an interfered wave by the lock-in detection is an excellent measuring method, further improvement is awaited in the phase signal extraction method for the atomic wave interferometer.

The present disclosure provides a phase difference measuring method solving the aforementioned problems. The phase difference measuring method uses an atomic wave interferometer that separates an atomic wave by a first Raman beam, reflects the atomic wave by a second Raman beam, and separates again the atomic wave by a third Raman beam to make the atomic wave interfere. The method applies to the second Raman beam an offset phase and an oscillation phase having an amplitude β and an angular frequency ω to modulate a phase of the atomic wave, measures an intensity signal I of an interfered atomic wave by a number-of-atoms measuring apparatus , calculates an observed phase difference Φ from a ω component and a 2ω component of the intensity signal I and the amplitude β, subtracts the offset phase from the observed phase difference Φ to calculate a measured phase difference, and conducts feedback control of the offset phase such that cosΦ = -1.

The present disclosure also provides an atomic wave interferometer solving the aforementioned problems. The atomic wave interferometer comprises: a Raman beam generation unit; an atomic beam source; a number-of-atoms measuring apparatus; and a signal processing unit. The Raman beam generation unit further includes a laser light source, splitters, frequency shifters, and a modulator. The signal processing unit further includes a fundamental wave component extraction unit, a second harmonic component extraction unit, a phase calculation unit, and a modulated signal generation unit.

According to the present disclosure, since a ratio of the ω component to the 2ω component of the intensity signal I is not dependent on the intensity of the input atomic wave, the phase can be measured without an influence of an intensity drift.

In addition, observation of the atomic wave at a dark fringe enables removal of intensity noise and minimization of shot noise.

### BRIEF DESCRIPTION OF THE DRAWINGS

FIG. 1A illustrates constructive interference of waves;
FIG. 1B illustrates destructive interference of waves;
FIG. 2 illustrates a laser interferometer type gyroscope;
FIG. 3A illustrates inelastic collision of a photon and an atom (acquisition of momentum) in Raman scattering;
FIG. 3B illustrates inelastic collision of a photon and an atom (loss of momentum) in Raman scattering;
FIG. 4 illustrates a Mach-Zehnder interferometer utilizing Raman scattering;
FIG. 5 illustrates phase control of an atomic wave by a second Raman beam.
FIG. 6 illustrates a dark fringe and a bright fringe;
FIG. 7 illustrates comparison between the intensity noise in the phase modulation method and the intensity noise in the conventional method;
FIG. 8 illustrates comparison between the shot noise in the phase modulation method and the shot noise in the conventional method;
FIG. 9 is a functional block diagram of an atomic wave interferometer according to a first embodiment;
FIG. 10 is a detailed functional block diagram of a signal processing unit according to the first embodiment;
FIG. 11 is a flow chart showing operation of the atomic wave interferometer according to the first embodiment;
FIG. 12 illustrates a difference between a phase difference due to acceleration and a phase difference due to angular velocity;
FIG. 13 is a functional block diagram of an atomic wave interferometer type gyroscope according to a second embodiment;
FIG. 14 is a detailed functional block diagram of a signal processing unit according to the second embodiment;
FIG. 15 is a flow chart showing operation of the atomic wave interferometer type gyroscope according to the second embodiment; and
FIG. 16 illustrates derivation of the shot noise and the intensity noise using field operators.

### DETAILED DESCRIPTION OF THE EMBODIMENTS

The embodiments of the present disclosure will be described in detail hereinafter. Note that constituent units having the same function will be denoted by the same numeral and description thereof will not be repeated.

The present disclosure is characterized in that intensity of an interfered atomic wave subjected to phase modulation is observed at a dark fringe (described later). Hereinafter, this is referred to as "dark fringe observation method".

First, principles of the "dark fringe observation method" will be described, and then, an atomic wave interferometer and a gyroscope employing the dark fringe observation method will be described.

### [Dark Fringe Observation Method]

The prior art sweeps a phase provided to an atomic wave at Raman scattering by ωₛt, and conducts lock-in detection of the interfered atomic wave with a frequency 2ωₛ.

In the present disclosure, θ(t) = βsinωₘt is added to the atomic wave to oscillate the phase, a ωₘ component S₁ and a 2ωₘ component S₂ of the interference result are extracted, and a ratio of S₁ to S₂ is obtained, to detect a phase difference (phase modulation method). β is an amplitude for oscillating the phase of the atomic wave and referred to as a modulation index.

When the modulation index is small, observation of the atomic wave at the dark fringe enables removal of intensity noise and minimization of shot noise. Given this, the phase of the atomic wave is further adjusted by a Raman beam and the interference result is observed at the dark fringe (operation point control).

### < Phase Modulation Method >

The atomic wave is modulated by θ(t) = βsinωₘt. The intensity of the atomic wave Iₘ observed in the position T in FIG. 5 is, from formula (16): $\begin{matrix}{I}_{m} = \frac{{I}_{0}}{2} \left(1+cos\left(Δϕ2βsin{ω}_{m}t\right)\right) \\ = \frac{{I}_{0}}{2} \left(1+cosΔϕcos \left(2βsin{ω}_{m}t\right)-sinΔϕsin \left(2βsin{ω}_{m}t\right)\right)\end{matrix}$ where Δϕ = ϕ₁ - ϕ₂. Fourier series expansion using a Bessel function gives the following. ${I}_{m} = \frac{{I}_{0}}{2} \left(\begin{matrix}1 + cos Δ ϕ \left({J}_{0}\left(2β\right)+2{J}_{2}\left(2β\right)cos 2{ω}_{m}t+⋯\right) \\ - sin Δ ϕ \left(2{J}_{1}\left(2β\right)sin{ω}_{m}t+⋯\right)\end{matrix}\right)$ The ωₘ component S₁ is obtained as follows. $\begin{matrix}{S}_{1} = Lo \left(sin{ω}_{m}t⋅{I}_{m}\right) \\ = Lo \left(\frac{{I}_{0}}{2}\left(⋯-sinΔϕ 2{J}_{1}\left(2β\right)\left(\frac{1 - cos 2 {ω}_{m} t}{2}\right)+⋯\right)\right) \\ = - \frac{{I}_{0}}{2} sin Δ {ϕJ}_{1} \left(2β\right)\end{matrix}$ The 2ωₘ component S₂ is obtained as follows. $\begin{matrix}{S}_{2} = Lo \left(sin\left(2{ω}_{m}t-\frac{π}{2}\right)⋅{I}_{m}\right) = Lo \left(-cos\left(2{ω}_{m}t\right)⋅{I}_{m}\right) \\ = Lo \left(\frac{{I}_{0}}{2}\left(…-cosΔϕ 2{J}_{2}\left(2β\right)\left(\frac{1 + cos 4 {ω}_{m} t}{2}\right)+⋯\right)\right) \\ = - \frac{{I}_{0}}{2} cos Δ {ϕJ}_{2} \left(2β\right)\end{matrix}$ Obtaining the ratio of S₁ to S₂ and solving as to Δϕ gives the following. $\begin{matrix}\frac{{S}_{1}}{{S}_{2}} = \frac{sin Δ {ϕJ}_{1} \left(2β\right)}{cos Δ {ϕJ}_{2} \left(2β\right)} = \frac{{J}_{1} \left(2β\right)}{{J}_{2} \left(2β\right)} tan Δ ϕ \\ Δ ϕ = {tan}^{- 1} \left(\frac{{J}_{2} \left(2β\right) {S}_{1}}{{J}_{1} \left(2β\right) {S}_{2}}\right)\end{matrix}$

As compared to formula (18), formula (23) does not include I₀ on the right side. In other words, Δϕ can be measured without an influence of the intensity of the input atomic wave.

### < Operation Point Control >

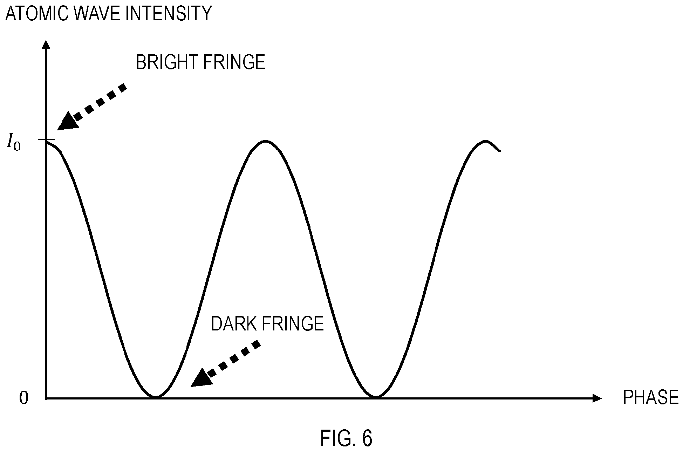

The graph in FIG. 6 illustrates formula (19), with the phase on the horizontal axis. Assuming "n" as integer, the position where Δϕ = 2nπ is referred to as the bright fringe, and the position where Δϕ = (2n - 1) π is referred to as the dark fringe.

When the interfered atomic waves subjected to the phase modulation is observed at the dark fringe, the intensity noise (classical noise) N^{C-D} is represented by the following formula as a function of the modulation index β. ${N}^{C - D} = \frac{1}{{J}_{1} \left(2β\right)} \sqrt{\frac{2 {ϵℏ}_{0} B}{{P}_{A}} \left(1-{J}_{0}\left(2β\right)+{J}_{2}\left(2β\right)-\frac{1}{4}\left(1-{J}_{0}\left(4β\right)+{J}_{2}\left(4β\right)\right)\right)}$

The intensity noise at the bright fringe N^{C-B} is represented by the following formula. ${N}^{C - B} = \frac{1}{{J}_{1} \left(2β\right)} \sqrt{\frac{2 {ϵℏω}_{0} B}{{P}_{2}} \left(1+{J}_{0}\left(2β\right)-{J}_{2}\left(2β\right)-\frac{1}{4}\left(1-{J}_{0}\left(4β\right)+{J}_{2}\left(4β\right)\right)\right)}$

The intensity noise N^{C-Conv} by the conventional method is represented by the following formula. ${N}^{C - Conv} = \sqrt{\frac{5}{2} ⋅ \frac{2 {ϵℏω}_{0} B}{{P}_{A}}}$

Derivation of formulae (24), (25), and (26) are described later.

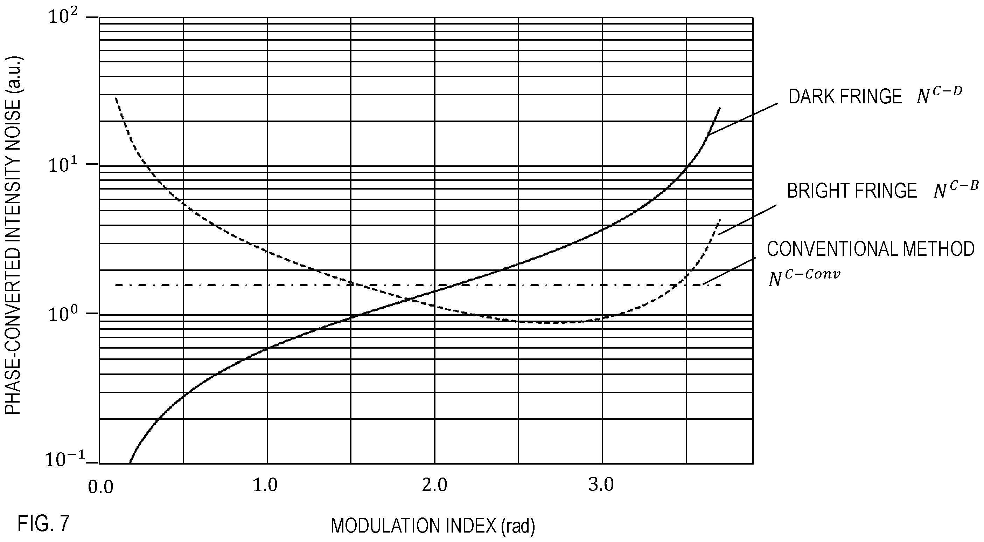

FIG. 7 illustrates N^{C-D}, N^{C-B}, and N^{C-Conv}. In the observation at the dark fringe, the intensity noise does not appear where the modulation index is small. In the phase modulation method, since a signal can be obtained even when the output power is almost zero, the region where the intensity noise does not appear can be used for observation.

When the interference result of the atomic waves subjected to the phase modulation is observed at the dark fringe, the shot noise (noise originated from quantum fluctuation) N^{Q-D} is represented by the following formula as a function of the modulation index β. ${N}^{Q - D} = \frac{1}{{J}_{1} \left(2β\right)} \sqrt{\frac{2 {ℏω}_{0} B}{{P}_{A}} \left[1-{J}_{0}\left(2β\right)+{J}_{2}\left(2β\right)\right]}$

The shot noise at the bright fringe N^{Q-B} is represented by the following formula. ${N}^{Q - B} = \frac{1}{{J}_{1} \left(2β\right)} \sqrt{\frac{2 {ℏω}_{0} B}{{P}_{A}} \left[1+{J}_{0}\left(2β\right)-{J}_{2}\left(2β\right)\right]}$

The shot noise by the conventional method N^{Q-Conv} is represented by the following formula. ${N}^{Q - Conv} = 2 \sqrt{\frac{2 {ℏω}_{0} B}{{P}_{A}}}$

Derivation of formulae (27), (28), and (29) are described later.

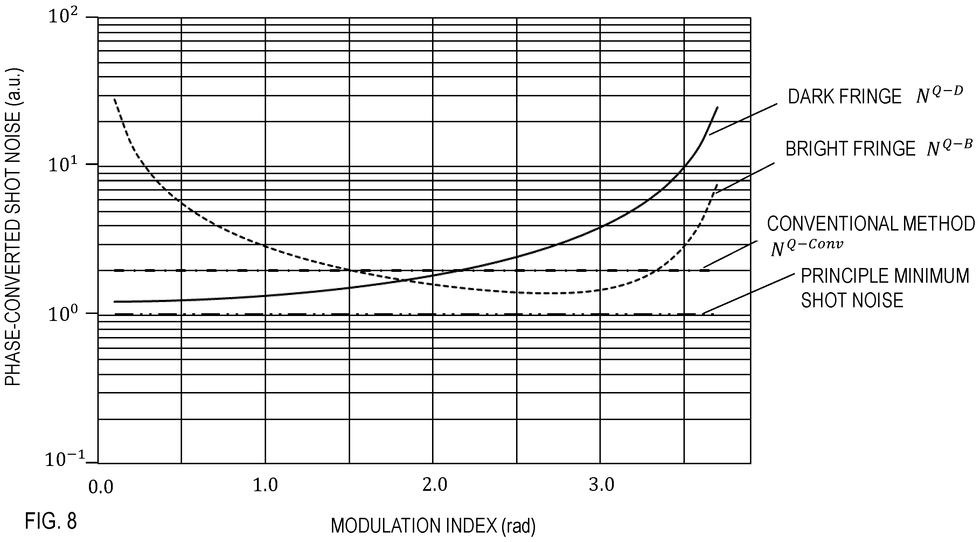

FIG. 8 illustrates N^{Q-D}, N^{Q-B}, and N^{Q-Conv} along with principle minimum shot noise. In the observation at the dark fringe, the shot noise is 1.6 times smaller than in the conventional method where the modulation index is small. Since the shot noise is originated from quantum fluctuation and cannot be avoided in principle, reduction thereof is of great significance.

For the above reasons, in the present disclosure, the interferometer is so controlled that the interference result of the atomic waves subjected to the phase modulation can be observed at the dark fringe (operation point control). The operation point control and restoration of the phase to be measured (target phase) are performed as follows.

When the target phase such as a Sagnac phase is Φ₀ and the phase modulation βsintωₘt and a phase shift Φ_{offset} are given by the Raman beam, the interfered wave intensity I_{ctrl} can be represented as follows. ${I}_{ctrl} = \frac{{I}_{0}}{2} \left(1+cos\left({Φ}_{0}+2\left(βsin{ω}_{m}t+{Φ}_{offset}\right)\right)\right)$

In comparison to formula (19), the phase difference Φ that appears in I_{ctrl} is as follows.: $Φ = {Φ}_{0} + 2 {Φ}_{offset}$

When the Φ_{offset} is controlled (for example, PID control) such that cos(Φ₀ + 2Φ_{offset}) = -1 following the fluctuation of the target phase Φ₀, measurement of Φ is always performed at the dark fringe.

Since Φ_{offset} used for the operation point control is known, the target phase Φ₀ is calculated as follows, using the measured Φ: ${Φ}_{0} = Φ - 2 {Φ}_{offset}$

### [First Embodiment]

### [Atomic Wave Interferometer]

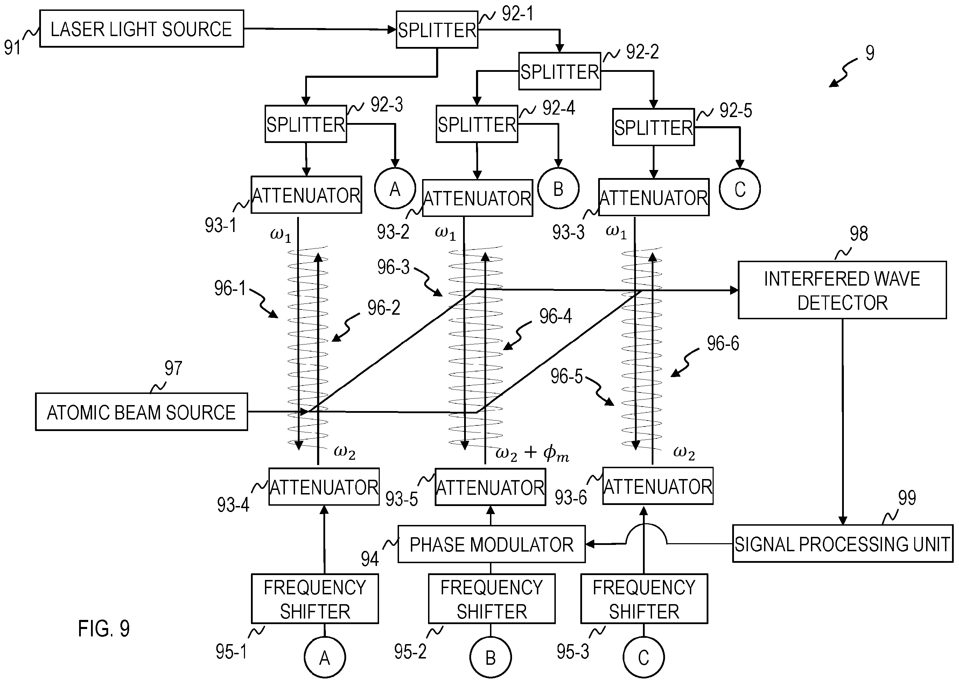

FIG. 9 is a functional block diagram showing a configuration example of an atomic wave interferometer 9 according to the first embodiment. The atomic wave interferometer 9 includes a laser light source 91, splitters 92-1 to 92-5, attenuators 93-1 to 93-6, a phase modulator 94, frequency shifters 95-1 to 95-3, an atomic beam source 97, an interfered wave detector 98, and a signal processing unit 99.

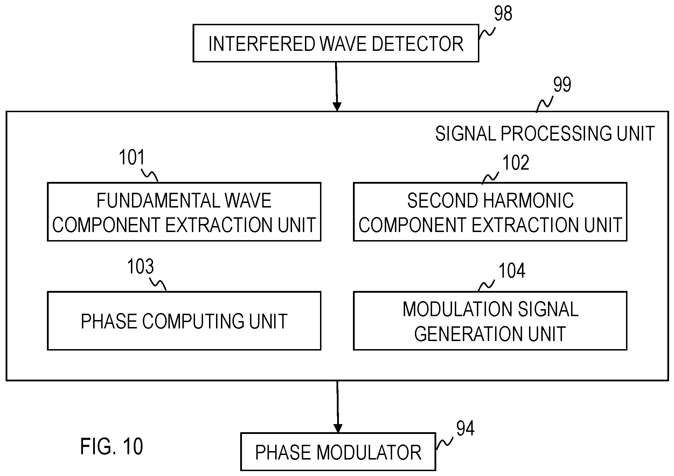

FIG. 10 is a detailed functional block diagram of the signal processing unit 99. The signal processing unit 99 includes a fundamental wave component extraction unit 101, a second harmonic component extraction unit 102, a phase calculation unit 103, and a modulated signal generation unit 104.

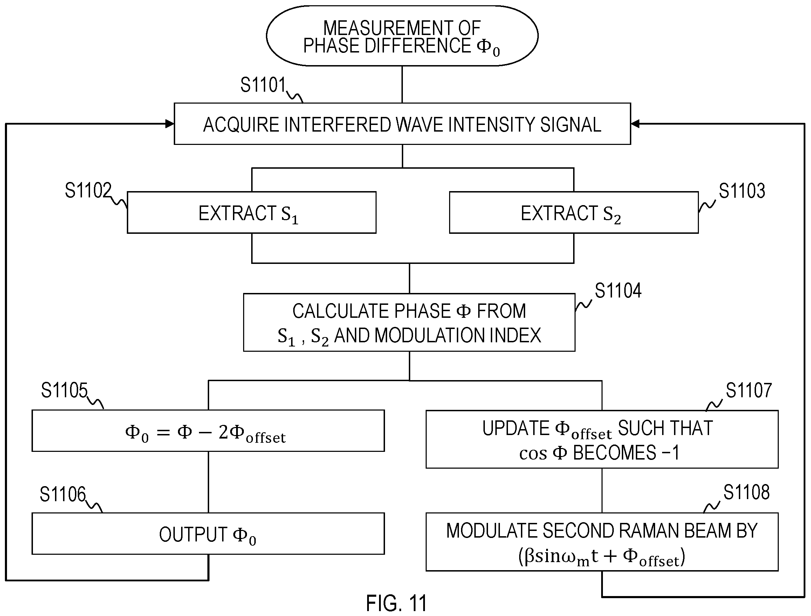

FIG. 11 is a flow chart showing an example of operation of the atomic wave interferometer 9.

First embodiment will be described with reference to FIGS. 9, 10, and 11.

### [Formation of Counter Propagating Raman Beams]

First, counter propagating Raman beams serving as the splitter and mirror for the atomic wave described above in the section < Mach-Zehnder Interferometer > are formed.

A laser beam generated in the laser light source 91 (frequency (ω₁) is split into six by the splitters 92-1 to 92-5. Outputs from one side of the splitters 92-3, 92-4, and 92-5 are laser beams 96-1, 96-3, and 96-5 of the frequency ω₁.

Outputs from the other side of the splitters 92-3, 92-4, and 92-5 are A, B, and C which are subjected to the frequency conversion by a frequency shifter into laser beams 96-2, 96-4, and 96-6 of the frequency ω₂.

Therefore, the laser beams 96-1 and 96-2 form a first Raman beam, the laser beams 96-3 and 96-4 form a second Raman beam, and the laser beams 96-5 and 96-6 form a third Raman beam.

For the sake of the description below, a system consisting of the atomic beam source, the three Raman beams, and the interfered wave detector is referred to as an "interference system".

### [Operation of Atomic Wave Interferometer]

The second Raman beam is applied with a modulation signal (βsintωₘt + Φ_{offset}) by the phase modulator 94.

The signal processing unit 99 acquires an interfered wave intensity signal observed by the interfered wave detector 98 (Step S1101).

The fundamental wave component extraction unit 101 extracts S₁ as described above in the section < Phase Modulation Method > (Step S1102).

The second harmonic component extraction unit 102 extracts S₂ as described above in the section < Phase Modulation Method > (Step S1103).

The phase calculation unit 103 calculates formula (23) to obtain Φ(= Δϕ) in formula (31) (Step S1104).

The phase calculation unit 103 calculates formula (32) to obtain Φ₀ (Step S1105) and outputs as a measured value of the target phase (Step S1106).

To measure the angular velocity by the atomic wave interferometer, the angular velocity can be calculated by further using formula (6).

The modulation signal generation unit 104 updates Φ_{offset} such that cosΦ is -1 (Step S1107).

The phase modulator 94 applies the updated modulation signal to the second Raman beam (Step S1108).

### [Supplementary Notes]

The interfered wave intensity is "Existence probability of one atom x Number of atoms supplied" in the interfered wave detector (position T in FIG. 4). Therefore, specific interfered wave detector is realized by a device that can measure the number of atoms. For example, the position T is exposed to probe light and fluorescence emitted by an atom in the state |g> or |e> is measured by a light detector or the like, to estimate the number of atoms.

The atomic wave interferometer according to the first embodiment has been described.

### [Second Embodiment]

When the atomic wave interferometer of the first embodiment is subjected to acceleration, the path of the atomic wave becomes parabolic due to the mass of the atom, whereby a phase difference arises from the difference of path length between the path 1 and the path 2. Therefore, the target phase observed by the atomic wave interferometer mounted on a moving body generally includes a phase difference arisen from the acceleration in addition to the angular velocity. When the phase difference arisen from the angular velocity (Sagnac phase) is denoted by ϕ_{Ω} and the phase difference arisen from the acceleration is denoted by ϕₐ, the target phase Φ₀ is represented by ${Φ}_{0} = {ϕ}_{Ω} + {ϕ}_{a}$

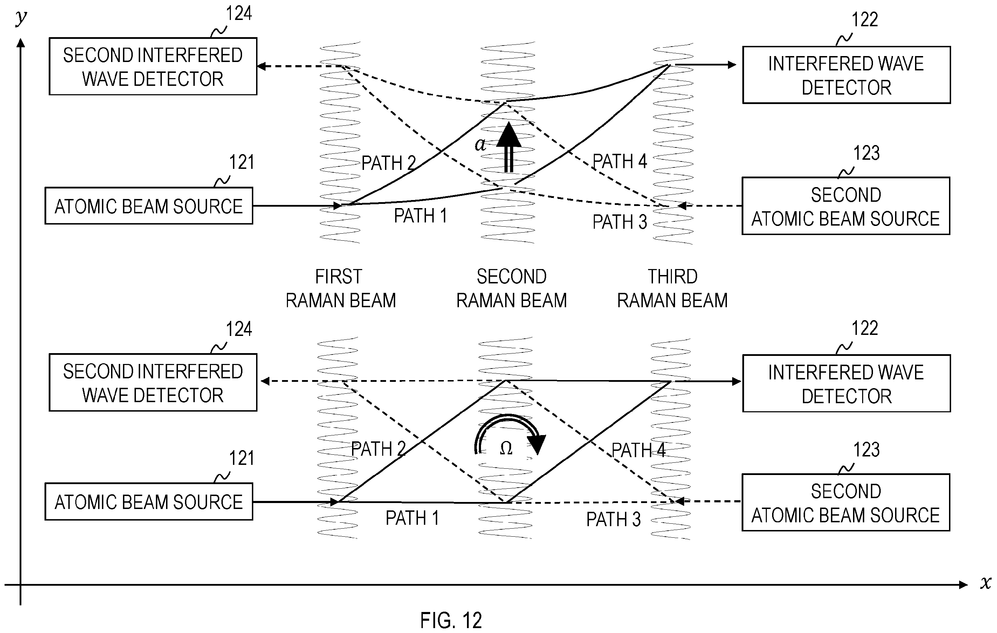

In the gyroscope for measuring the angular velocity, the interference systems are placed opposite each other as in FIG. 12. The system including the atomic beam source 121 and the interfered wave detector 122 is referred to a first interference system, while the system including a second atomic beam source 123 and a second interfered wave detector 124 is referred to as a second interference system.

A lower path of the second interference system is referred to as path 3, an upper path is referred to as path 4, a phase observed by the interfered wave detector 122 is denoted by Φ₁, and a phase observed by the second interfered wave detector 124 is denoted by Φ₂.

The phase shift arisen from the acceleration is the same in the path 1 and the path 3, and the same in the path 2 and the path 4; however, as for the phase shift arisen from the angular velocity, the sign of values flips between the path 1 and the path 3 because the directions of the atomic waves are reverse. The same applies to the path 2 and the path 4. Therefore, ${Φ}_{1} = {ϕ}_{Ω} + {ϕ}_{a}$ ${Φ}_{2} = - {ϕ}_{Ω} + {ϕ}_{a}$

By taking difference between Φ₁ and Φ₂, the phase arisen from the acceleration is canceled and only the Sagnac phase can be taken out. ${Φ}_{Ω} = \frac{1}{2} \left({Φ}_{1}-{Φ}_{2}\right)$

The dark fringe observation method is to be applied to the atomic wave interferometer type gyroscope. For that, output from the second interference system when the first interference system is operated at the dark fringe will be studied.

### < Operation Point Control of First Interference System >

When the phase modulation and offset are applied to the second Raman beam, the interfered wave intensity I_{R} output from the first interference system is as follows. ${I}_{R} = \frac{{I}_{0}}{2} \left(1+cos \left[\left({ϕ}_{Ω}+{ϕ}_{a}\right)+2\left(βsin{ω}_{m}t+{Φ}_{offset}\right)\right]\right)$ The target phase Φ_{R} of the first interference system measured by the phase modulation method is, from formulae (19) and (23), as follows. ${Φ}_{R} = {ϕ}_{Ω} + {ϕ}_{a} + 2 {Φ}_{offset}$

When the Φ_{offset} is controlled such that $cos \left({ϕ}_{Ω}+{ϕ}_{a}+2{Φ}_{offset}\right) = - 1$ to follow the fluctuation of (ϕ_{Ω} + ϕₐ), measurement of Φ_{R} is always performed at the dark fringe.

### < Operation Point of Second Interference System >

The interfered wave intensity of the second interference system I_{L} is expressed as follows. ${I}_{L} = \frac{{I}_{0}}{2} \left(1+cos \left[\left(-{ϕ}_{Ω}+{ϕ}_{a}\right)+2\left(βsin{ω}_{m}t+{Φ}_{offset}\right)\right]\right)$ Using formula (38), I_{L} will be rewritten as follows. $\begin{matrix}{I}_{L} = \frac{{I}_{0}}{2} \left(1+cos\left[\left({ϕ}_{Ω}+{ϕ}_{a}+2{Φ}_{offset}\right)+\left(-2{ϕ}_{Ω}+2β sin {ω}_{m}t\right)\right]\right) \\ = \frac{{I}_{0}}{2} \left(1-cos\left(-2{ϕ}_{Ω}+2β sin {ω}_{m}t\right)\right)\end{matrix}$ Therefore, the operation point of the second interference system is also at the dark fringe. Even if "cos" in formula (19) is a negative sign, the result of formula (23) is unchanged, and the phase Φ_{L} of the second interference system measured by the phase modulation method is ${Φ}_{L} = - 2 {ϕ}_{Ω}$ In other words, as a result of the operation point control of the first interference system at the dark fringe, -2 times the Sagnac phase is measured from the output of the second interference system.

### [Atomic Wave Interferometer Type Gyroscope]

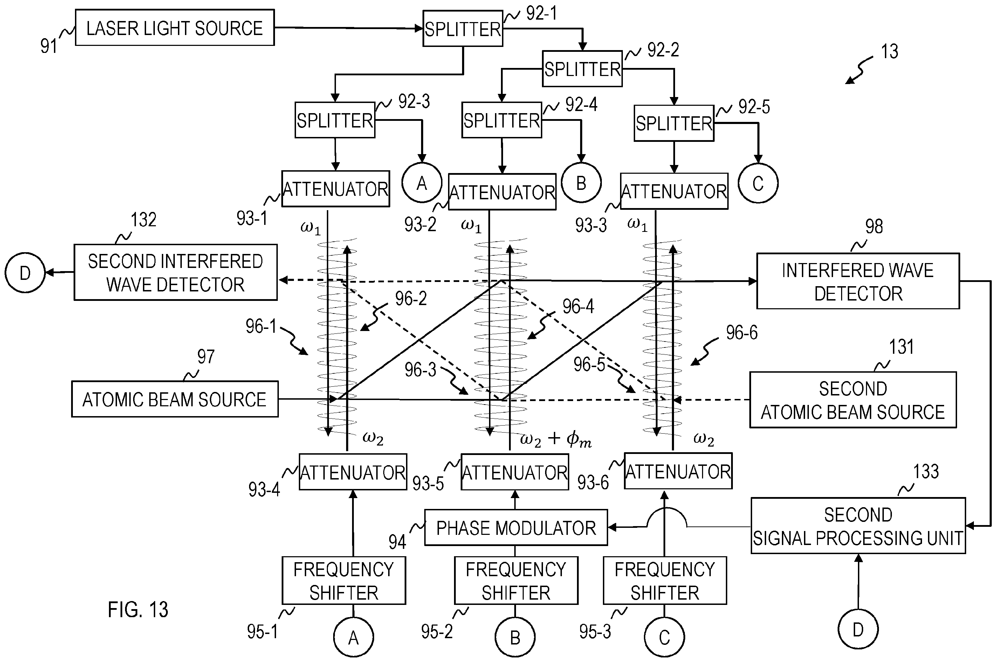

FIG. 13 is a functional block diagram showing a configuration example of an atomic wave interferometer type gyroscope 13 according to the second embodiment. Hereinafter, the "atomic wave interferometer type gyroscope" is simply referred to as an "atomic wave gyroscope".

The atomic wave gyroscope 13 is configured by adding a second atomic beam source 131 and a second interfered wave detector 132 to the atomic wave interferometer 9, and providing a second signal processing unit 133 instead of the signal processing unit 99.

Hereinafter, a system consisting of the atomic beam source 97, the first to third Raman beams, and the interfered wave detector 98 is referred to as a "right side interference system". A system constituted of the second atomic beam source 131, the first to third Raman beams, and the second interfered wave detector 132 is referred to as a "left side interference system".

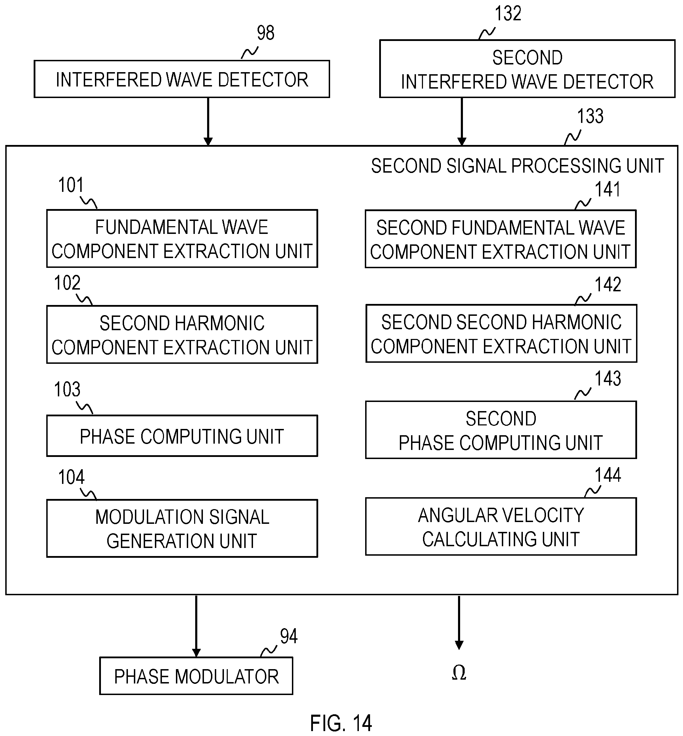

FIG. 14 is a detailed functional block diagram of the second signal processing unit 133. The second signal processing unit 133 is configured by adding a second fundamental wave component extraction unit 141, a second second-harmonic component extraction unit 142, a second phase calculation unit 143, and an angular velocity calculation unit 144 to the signal processing unit 99 of the first embodiment.

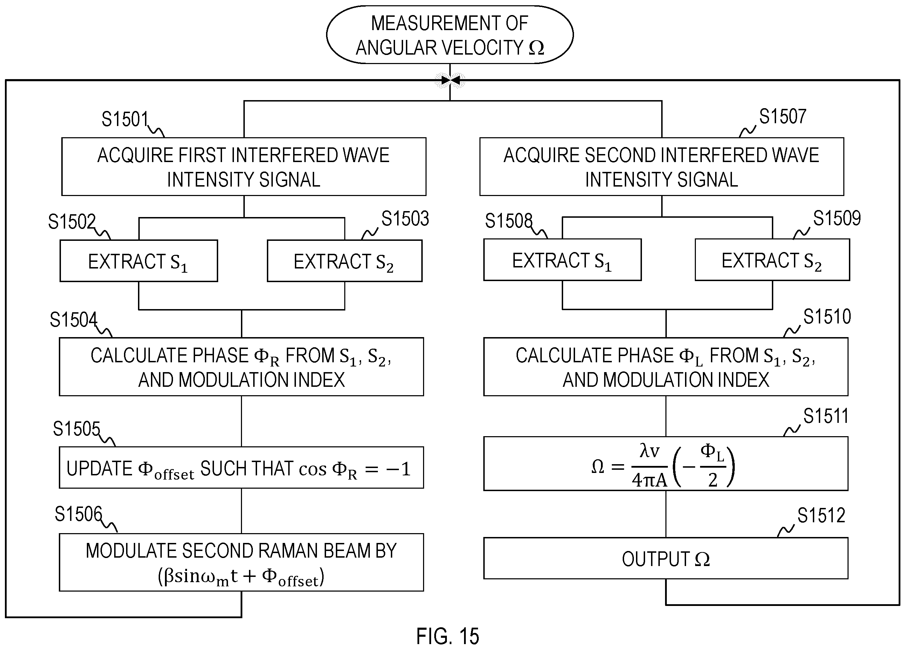

FIG. 15 is a flow chart showing an example of operation of the atomic wave gyroscope 13.

Second embodiment will be described with reference to FIGS. 13, 14, and 15.

### [Formation of Counter Propagating Raman Beams]

Counter propagating Raman beams are formed in a similar manner to the first embodiment.

### [Operation of Atomic Wave Gyroscope]

The second Raman beam is applied with a modulation signal (βsintωₘt + Φ_{offset}) by the phase modulator 94.

### < Operation of First Interference System >

The second signal processing unit 133 acquires a first interfered wave intensity signal observed by the interference wave detector 98 (Step S1501).

The fundamental wave component extraction unit 101 extracts S₁ as described above in the section < Phase Modulation Method > (Step S1502).

The second harmonic component extraction unit 102 extracts S₂ as described above in the section < Phase Modulation Method > (Step S1503).

The phase calculation unit 103 calculates formula (23) to obtain Φ_{R} in formula (37) (Step S1504).

The modulated signal generation unit 104 updates Φ_{offset} such that cosΦ_{R} is -1 (Step S1505).

The phase modulator 94 applies the updated modulated signal to the second Raman beam (Step S1506).

### < Operation of Second Interference System >

The second signal processing unit 133 acquires a second interference wave intensity signal observed by the second interfered wave detector 132 (Step S1507).

The second fundamental wave component extraction unit 141 extracts S₁ as described above in the section < Phase Modulation Method > (Step S1508).

The second second-harmonic component extraction unit 142 extracts S₂ as described above in the section < Phase Modulation Method > (Step S1509).

The second phase calculation unit 143 calculates formula (23) to obtain Φ_{L} in formula (41) (Step S1510). As in formula (41), Φ_{E} is -2 times the Sagnac phase.

The angular velocity calculation unit 144 calculates the angular velocity Q by the following formula (Step S1511). $Ω = \frac{λv}{4 πA} \left(-\frac{{Φ}_{L}}{2}\right)$

The second signal processing unit 133 outputs S2 (Step S1512).

The atomic wave gyroscope according to the second embodiment has been described.

### [Details of Intensity Noise and Shot Noise]

An output signal of the atomic wave interferometer corresponds to the number of atoms observed at an output port of the interferometer. Hereinafter, the atomic wave is treated by the quantum field theory to calculate fluctuation of the number of atoms observed.

### < Field operators >

Operators orthogonally decomposed into amplitude and phase quadratures are used to represent each of atomic wave and atomic wave fluctuation: $Atomic wave = A \left(t\right) cos {ω}_{0} t + P \left(t\right) sin {ω}_{0} t$ $Atomic wave fluctuation = {a}_{1} \left(t\right) cos {ω}_{0} t + {a}_{2} \left(t\right) sin {ω}_{0} t$ where ω₀ is an angular frequency of the atomic wave, A and a₁ are amplitude quadratures, and P and a₂ are phase quadratures.

For convenience, the quadrature of the atomic wave and the quadrature of the atomic wave fluctuation are expressed in vector notations as follows. $\vec{B \left(t\right)} = \left(\begin{matrix}A \left(t\right) \\ P \left(t\right)\end{matrix}\right)$ $\vec{b \left(t\right)} = \left(\begin{matrix}{a}_{1} \left(t\right) \\ {a}_{2} \left(t\right)\end{matrix}\right)$

### [Propagation of Atomic Wave]

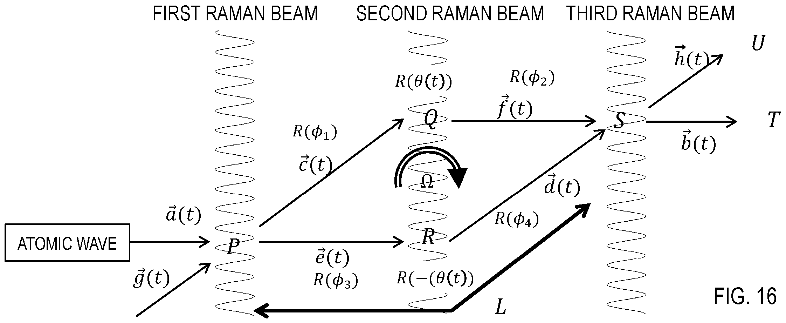

Propagation of atomic wave will be described with reference to FIG. 16.

The first Raman beam splits the atomic wave into two atomic waves with 1/√2 amplitude.

The second Raman beam reflects the atomic wave and applies a phase. A phase of θ(t) + θ' is applied in the Raman scattering in which the atomic wave loses momentum, and a phase of -(θ(t) + θ') is applied in the Raman scattering in which the atomic wave acquires momentum. Note that θ(t) = βsintωₘt, and θ' is an adjustable phase of the second Raman beam.

The third Raman beam splits the atomic wave advanced from Q to S into two atomic waves with 1/√2 amplitude. The third Raman beam also splits the atomic wave advanced from R to S into two atomic waves with 1/√2 amplitude.

Then, when the atomic wave incident on the interferometer is Aᵢₙ^{→}, the outgoing interfered wave B(t)' to T is as follows. $\begin{matrix}\vec{B \left(t\right)} = \left(PQST+PRST\right) \vec{{A}_{ιn}} \\ = \left[\left(\frac{1}{\sqrt{2}}R\left({ϕ}_{2}\right)R\left(θ\left(t\right)+θ′\right)R\left({ϕ}_{1}\right)\frac{1}{\sqrt{2}}\right)+\left(\frac{1}{\sqrt{2}}R\left({ϕ}_{4}\right)R\left(-\left(θ\left(t\right)+θ′\right)\right)R\left({ϕ}_{3}\right)\frac{1}{\sqrt{2}}\right)\right] \vec{{A}_{ιn}} \\ = \frac{1}{2} \left(R\left({ϕ}_{1}+{ϕ}_{2}\right)R\left(θ\left(t\right)+θ′\right)+R\left({ϕ}_{3}+{ϕ}_{4}\right)R\left(-\left(θ\left(t\right)+θ′\right)\right)\right) \vec{{A}_{ιn}}\end{matrix}$ Note that ϕ₁, ϕ₂, ϕ₃, and ϕ₄ are phases applied during propagation in PQ, QS, PR, and RS sections, and R(ϕ) is represented as follows. $R \left(ϕ\right) = \left(\begin{matrix}cos ϕ & - sin ϕ \\ sin ϕ & cos ϕ\end{matrix}\right)$

When the Sagnac phase generated in the interferometer by rotation shown in FIG. 16 is Φ, Φ is expressed as follows as the half-round wave interferes in the atomic wave interferometer. ${ϕ}_{1} + {ϕ}_{2} = - \frac{Φ}{2}$ ${ϕ}_{3} + {ϕ}_{4} = \frac{Φ}{2}$

It is assumed that the atomic wave incident on the interferometer is in an "amplitude quadrature" direction. $\vec{{A}_{in}} = {A}_{0} \left(\begin{matrix}1 \\ 0\end{matrix}\right)$

Substituting these into formula (45) and rearranging it gives the following. $\vec{B \left(t\right)} = {A}_{0} cos \left(θ\left(t\right)+θ′-\frac{Φ}{2}\right) \left(\begin{matrix}1 \\ 0\end{matrix}\right)$

The intensity of the atomic wave I is expressed as follows. $I ∝ {cos}^{2} \left(θ\left(t\right)+θ′-\frac{Φ}{2}\right) = \frac{1}{2} \left(1+cos\left(2θ\left(t\right)+2θ′-Φ\right)\right)$ When the Sagnac phase Φ is small, the adjustable phase should be 2θ' = (2n - 1)π for the dark fringe observation, and 2θ' = 2nπ for the bright fringe observation.

### < Output Interfered Wave: Dark Fringe >

Under dark fringe operation, an interfered wave B_{D}(*t*)^{→} is obtained by substituting (2n-1) π for 2θ' in formula (49), that is, formula (51). $\vec{{B}_{D} \left(t\right)} \approx {A}_{0} {\left(-1\right)}^{n} \left(sinθ\left(t\right)-\frac{Φ}{2}cosθ\left(t\right)\right) \left(\begin{matrix}1 \\ 0\end{matrix}\right)$

### < Output Interfered Wave: Bright Fringe >

Under bright fringe operation, an interfered wave B_{B}(*t*)^{→} of the bright fringe is obtained by substituting 2nπ for 2θ' in formula (49), that is, formula (52). $\vec{{B}_{B} \left(t\right)} \approx {A}_{0} {\left(-1\right)}^{n} \left(cosθ\left(t\right)+\frac{Φ}{2}sinθ\left(t\right)\right) \left(\begin{matrix}1 \\ 0\end{matrix}\right)$

### < Propagation of Atomic Wave Fluctuation >

A relationship of the atomic wave fluctuation at each point in FIG. 16 can be represented as follows: $\vec{b \left(t\right)} = \frac{1}{\sqrt{2}} \vec{f \left(t\right)} + \frac{1}{\sqrt{2}} \vec{d \left(t\right)}$ $\vec{c \left(t\right)} = \frac{1}{\sqrt{2}} \vec{a \left(t\right)} - \frac{1}{\sqrt{2}} \vec{g \left(t\right)}$ $\vec{d \left(t\right)} = R \left(-\left(θ\left(t\right)+θ′\right)\right) \vec{e \left(t-τ\right)}$ $\vec{e \left(t\right)} = \frac{1}{\sqrt{2}} \vec{a \left(t\right)} + \frac{1}{\sqrt{2}} \vec{g \left(t\right)}$ $\vec{f \left(t\right)} = R \left(θ\left(t\right)+θ′\right) \vec{c \left(t-τ\right)}$ where τ=L/c. Note that there is classically no incident atomic wave in the state |e> (the term g(t)^), quantum-mechanically g(t)^{→} is not zero due to a vacuum field.

From these relationships, the atomic wave fluctuation b(t)^ outgoing to T is obtained by formula (54). $\vec{b \left(t\right)} = \left(\begin{matrix}cos \left(θ\left(t\right)+θ′\right) {a}_{1} \left(t-τ\right) + sin \left(θ\left(t\right)+θ′\right) {g}_{2} \left(t-τ\right) \\ cos \left(θ\left(t\right)+θ′\right) {a}_{2} \left(t-τ\right) - sin \left(θ\left(t\right)+θ′\right) {g}_{1} \left(t-τ\right)\end{matrix}\right)$

The adjustable phase should be 2θ' = (2n - 1)π for the dark fringe observation, and 2θ' = 2nπ for the bright fringe observation.

### < Output Atomic Wave Fluctuation: Dark Fringe >

Under dark fringe operation, an atomic wave fluctuation b_{D}(t)^{→} is obtained by substituting (2n-1) π for 2θ' in formula (54), that is, formula (55). $\vec{{b}_{D} \left(t\right)} = {\left(-1\right)}^{n} \left(\begin{matrix}sin θ \left(t\right) {a}_{1} \left(t-τ\right) - cos θ \left(t\right) {g}_{2} \left(t-τ\right) \\ sin θ \left(t\right) {a}_{2} \left(t-τ\right) + cos θ \left(t\right) {g}_{1} \left(t-τ\right)\end{matrix}\right)$

### < Output Atomic Wave Fluctuation: Bright Fringe >

Under bright fringe operation, an atomic wave fluctuation b_{B}(t)^{→} is obtained by substituting 2nπ for 2θ' in formula (54), that is, formula (56). $\vec{{b}_{B} \left(t\right)} = {\left(-1\right)}^{n} \left(\begin{matrix}cos θ \left(t\right) {a}_{1} \left(t-τ\right) + sin θ \left(t\right) {g}_{2} \left(t-τ\right) \\ cos θ \left(t\right) {a}_{2} \left(t-τ\right) - sin θ \left(t\right) {g}_{1} \left(t-τ\right)\end{matrix}\right)$

### < Shot Noise: Dark Fringe >

A signal intensity δP^{sig-D} originated from the phase difference is, from the first and second terms of formula (51), represented by formula (57): $\begin{matrix}{δP}^{sig - D} = - {ℏω}_{0} {A}_{0}^{2} \left(\frac{Φ}{2}\right) sin θ \left(t\right) cos θ \left(t\right) \\ = - \frac{1}{2} {ℏω}_{0} {A}_{0}^{2} \left(\frac{Φ}{2}\right) sin 2 θ \left(t\right)\end{matrix}$ where ω₀ is the angular frequency of the atomic wave.

A DC component obtained by multiplying formula (57) by a demodulation function D₀sintωₘt is as follows: $\begin{matrix}{δP}_{DC}^{sig - D} \approx Lo \left(-\frac{1}{2}{ℏω}_{0}{A}_{0}^{2}\left(\frac{Φ}{2}\right)\left(2{J}_{1}\left(2β\right)sin{ω}_{m}t\right){D}_{0}sin{ω}_{m}t\right) \\ = - {P}_{A} {D}_{0} \left(\frac{Φ}{2}\right) {J}_{1} \left(2β\right)\end{matrix}$ where Lo (·) represents low pass filtering and ${P}_{A} = \frac{{ℏω}_{0} {A}_{0}^{2}}{2}$ represents an incident atomic wave intensity.

On the other hand, intensity fluctuation δP_{D} including a signal and noise detected by an atom number detector is obtained, from formulae (51) and (55), as follows. $\begin{matrix}{δP}_{D} = {ℏω}_{0} \left({\vec{{B}_{D}}}^{T}\vec{{B}_{D}}\right) \\ = {ℏω}_{0} {A}_{0} sin θ \left(t\right) \left(sinθ\left(t\right){a}_{1}\left(t-τ\right)-cosθ\left(t\right){g}_{2}\left(t-τ\right)\right) \\ - {A}_{0} \frac{Φ}{2} cos θ \left(t\right) \left(sinθ\left(t\right){a}_{1}\left(t-τ\right)-cosθ\left(t\right){g}_{2}\left(t-τ\right)\right)\end{matrix}$ Therefore, the shot noise δP^{snot-D} is obtained, from the first term of formula (60), as follows. $\begin{matrix}{δP}^{shot - D} = {ℏω}_{0} {A}_{0} sin θ \left(t\right) \left(sinθ\left(t\right){a}_{1}\left(t-τ\right)-cosθ\left(t\right){g}_{2}\left(t-τ\right)\right) \\ = \frac{1}{2} {ℏω}_{0} {A}_{0} \left[\left(1-cos 2θ\left(t\right)\right){a}_{1}\left(t-τ\right)-sin 2θ\left(t\right){g}_{2}\left(t-τ\right)\right]\end{matrix}$

A power spectrum density of the shot noise is obtained by, from a coefficients a₁ and g₂ in formula (61), formula (62) (Reference document: A. Buonanno et. al., Phys. Rev. D 67, 122005, 2003): $\begin{matrix}{S}^{shot - D} \\ = \frac{1}{T} {\int }_{0}^{T} {\left(\frac{1}{2}{ℏω}_{0}{A}_{0}\right)}^{2} \left({\left(1-cos 2θ\left(t\right)\right)}^{2}+{sin}^{2}2θ\left(t\right)\right) {D}_{0}^{2} {sin}^{2} {ω}_{m} t dt \\ = \frac{{P}_{A} {ℏω}_{0} {D}_{0}^{2}}{2} \left(1-{J}_{0}\left(2β\right)+{J}_{2}\left(2β\right)\right)\end{matrix}$ where T = 2π/ωₘ is a period of the phase modulation and demodulation.

A power spectrum density of a signal-to-noise ratio is obtained, from δP_{DC}^{sig-D} and S^{shot-D} , as follows. $\frac{{S}^{shot - D}}{{\left({δP}_{DC}^{sig - D}/Φ\right)}^{2}} = \frac{2 {ℏω}_{0}}{{P}_{A}} \frac{1 - {J}_{0} \left(2β\right) + {J}_{2} \left(2β\right)}{{J}_{1} {\left(2β\right)}^{2}}$

By multiplying formula (63) by a bandwidth B of an observation band and taking the square root, the deviation of the fluctuation observed at the dark fringe is obtained (formula (27)).

### < Shot Noise: Bright Fringe >

From the bright fringe formulae (52), (56), formula (28) is obtained in a similar manner.

### < Intensity Noise: Dark Fringe >

Ignoring the vacuum field g₂ in formula (62) (setting it to zero) and calculating the classical fluctuation as ε times the vacuum field fluctuation, the power spectral density S^{int-D} of the classic intensity fluctuation is obtained as follows. $\begin{matrix}{S}^{int - D} = \frac{1}{T} {\int }_{0}^{T} {\left(\frac{ϵ}{2}{ℏω}_{0}{A}_{0}\right)}^{2} {\left(1-cos 2θ\left(t\right)\right)}^{2} {D}_{0}^{2} {sin}^{2} {ω}_{m} t dt \\ = \frac{{ϵP}_{A} {ℏω}_{0} {D}_{0}^{2}}{2} \left(1-{J}_{0}\left(2β\right)+{J}_{2}\left(2β\right)-\frac{1}{4}\left(1-{J}_{0}\left(4β\right)+{J}_{2}\left(4β\right)\right)\right)\end{matrix}$ A power spectrum density of a signal-to-noise ratio is obtained, from δP_{DC}^{sig-D} and S^{int-D}, as follows. $\begin{matrix}\frac{{S}^{int - D}}{{\left({δP}_{DC}^{sig - D}/Φ\right)}^{2}} \\ = \frac{2 {ϵℏω}_{0}}{{P}_{A}} \frac{1 - {J}_{0} \left(2β\right) + {J}_{2} \left(2β\right) - \frac{1}{4} \left(1-{J}_{0}\left(4β\right)+{J}_{2}\left(4β\right)\right)}{{J}_{1} {\left(2β\right)}^{2}}\end{matrix}$

By multiplying formula (65) by a bandwidth B of an observation band and taking the square root, the intensity noise observed at the dark fringe is obtained (formula (24)).

### < Intensity Noise: Bright Fringe >

In a similar manner, formula (25) is obtained by calculating with the vacuum field being zero.

### < Conventional Method: Shot Noise >

When dealing with the interfered atomic wave and the atomic wave fluctuation according to the conventional method, it is sufficient to substitute θ(t) + θ' = ωₛt in formulae (49) and (54). The interfered wave B'(t)^ and the atomic wave fluctuation b'(t)^ outgoing to T are given as follows. $\vec{B ′ \left(t\right)} = {A}_{0} cos \left({ω}_{s}t-\frac{Φ}{2}\right) \left(\begin{matrix}1 \\ 0\end{matrix}\right) \approx {A}_{0} \left(cos {ω}_{s}t+\frac{Φ}{2}sin {ω}_{s}t\right) \left(\begin{matrix}1 \\ 0\end{matrix}\right)$ $\vec{b ′ \left(t\right)} = \left(\begin{matrix}cos {ω}_{s} {a}_{1} \left(t-τ\right) + sin {ω}_{s} {g}_{2} \left(t-τ\right) \\ cos {ω}_{s} {a}_{2} \left(t-τ\right) - sin {ω}_{s} {g}_{1} \left(t-τ\right)\end{matrix}\right)$

A signal intensity δP^{sig-Conv} originated from the phase difference is obtained, from the first and second terms of formula (66), as follows: ${δP}^{sig - Conv} = \frac{1}{2} {ℏω}_{0} {A}_{0}^{2} \left(\frac{Φ}{2}\right) sin 2 {ω}_{s} t$ and a DC component obtained by multiplying δP^{sig-Conv} by a demodulation function D₀sin2ωₛt is as follows. $\begin{matrix}{δP}_{DC}^{sig - Conv} = Lo \left({D}_{0} sin 2{ω}_{s}t\left(\frac{1}{2}{ℏω}_{0}{A}_{0}^{2}\left(\frac{Φ}{2}\right) sin 2{ω}_{s}t\right)\right) \\ = \frac{1}{4} {D}_{0} {ℏω}_{0} {A}_{0}^{2} \left(\frac{Φ}{2}\right)\end{matrix}$

The intensity fluctuation δP_{Conv} including a signal and noise is obtained, from formulae (66) and (67), as follows: $\begin{matrix}{δP}_{Conv} = {ℏω}_{0} \left({\vec{B ′}}^{T}\vec{b ′}\right) \\ = {ℏω}_{0} {A}_{0} cos {ω}_{s} t \left(cos {ω}_{s}t {a}_{1}\left(t-τ\right)+sin {ω}_{s}t {g}_{2}\left(t-τ\right)\right) \\ + {ℏω}_{0} {A}_{0} \frac{Φ}{2} sin {ω}_{s} t \left(cos {ω}_{s}t {a}_{1}\left(t-τ\right)+sin {ω}_{s}t {g}_{2}\left(t-τ\right)\right)\end{matrix}$ and the shot noise is obtained, from the first term of formula (70) as follows. $\begin{matrix}{δP}^{shot} = {ℏω}_{0} {A}_{0} \left[cos {ω}_{s}t\left(cos {ω}_{s}t {a}_{1}\left(t-τ\right)+sin {ω}_{s} t {g}_{2}\left(t-τ\right)\right)\right] \\ = \frac{1}{2} {ℏω}_{0} {A}_{0} \left[\left(1+cos 2{ω}_{s}t\right){a}_{1}\left(t-τ\right)+sin 2{ω}_{s}t {g}_{2}\left(t-τ\right)\right]\end{matrix}$

A power spectrum density S^{shot-Conv} of the shot noise is, from coefficients a₁ and g₂ in formula (71): $\begin{matrix}{S}^{shot - Conv} \\ = \frac{{\left({ℏω}_{0}{A}_{0}{D}_{0}\right)}^{2}}{4} \frac{1}{T ′} {\int }_{0}^{T ′} \left({\left(1+cos 2{ω}_{s}t\right)}^{2}+{sin}^{2} 2{ω}_{s}t\right) {sin}^{2} 2 {ω}_{s} t dt \\ = \frac{{\left({ℏω}_{0}{A}_{0}{D}_{0}\right)}^{2}}{4}\end{matrix}$ where T' = 2π/2ωₛ is a period of the phase modulation and demodulation.

A power spectrum density of a signal-to-noise ratio is obtained, from δP_{DC}^{sig-Conv} and S^{shot-Conv}, as follows. $\frac{{S}^{shot - Conv}}{{\left({δP}_{DC}^{sig - Conv}/Φ\right)}^{2}} = \frac{{\left({ℏω}_{0}{A}_{0}{D}_{0}\right)}^{2}}{4} {\left(\frac{8}{{D}_{0} {ℏω}_{0} {A}_{0}^{2}}\right)}^{2} = \frac{16}{{A}_{0}^{2}} = 8 \frac{{ℏω}_{0}}{{P}_{A}}$

By multiplying formula (73) by a bandwidth B of an observation signal and taking the square root, the deviation of the fluctuation is obtained (formula (29)).

### < Conventional Method: Intensity Noise >

The intensity noise S^{int-Conv} is calculated, with the vacuum field being zero in formula (72), as follows. $\begin{matrix}{S}^{int - Conv} = \frac{ϵ {\left({ℏω}_{0}{A}_{0}{D}_{0}\right)}^{2}}{4} \frac{1}{T} {\int }_{0}^{T} {\left(1+cos 2{ω}_{s}t\right)}^{2} {sin}^{2} 2 {ω}_{s} t dt \\ \approx \frac{5 ϵ}{8} \frac{{\left({ℏω}_{0}{A}_{0}{D}_{0}\right)}^{2}}{4}\end{matrix}$

A power spectrum density of a signal-to-noise ratio is obtained, from δP_{DC}^{sig-Conv} and S^{int-Conv}, as follows. $\begin{matrix}\frac{{S}^{int - Conv}}{{\left({δP}_{DC}^{sig - Conv}/Φ\right)}^{2}} = \frac{5 ϵ}{8} \frac{{\left({ℏω}_{0}{A}_{0}{D}_{0}\right)}^{2}}{4} {\left(\frac{8}{{D}_{0} {ℏω}_{0} {A}_{0}^{2}}\right)}^{2} \\ = \frac{5 ϵ}{8} \frac{16}{{A}_{0}^{2}} = \frac{5 ϵ}{8} ⋅ 16 \frac{{ℏω}_{0}}{2 {P}_{A}} = \frac{5}{2} ⋅ \frac{2 {ϵℏω}_{0}}{{P}_{A}}\end{matrix}$

By multiplying formula (75) by a bandwidth B of an observation band and taking the square root, the intensity noise is obtained (formula (26)).

The detailed description of the noise has been given.

## Claims

1. A phase difference measuring method using an atomic wave interferometer that separates an atomic wave by a first Raman beam, reflects the atomic wave by a second Raman beam, and separates again the atomic wave by a third Raman beam to make the atomic wave interfere, the method comprising:
applying to the second Raman beam an offset phase and an oscillation phase having an amplitude β and an angular frequency ω to modulate a phase of the atomic wave;
measuring an intensity signal I of an interfered atomic wave by a number-of-atoms measuring apparatus;
calculating an observed phase difference Φ from a ω component and a 2ω component of the intensity signal I and the amplitude β;
subtracting the offset phase from the observed phase difference Φ to calculate a measured phase difference; and
conducting feedback control of the offset phase such that cosΦ = -1.

2. An atomic wave interferometer comprising:
a Raman beam generation unit;
an atomic beam source;
a number-of-atoms measuring apparatus; and
a signal processing unit, wherein
the Raman beam generation unit includes a laser light source, splitters, frequency shifters, and a modulator, and
the signal processing unit includes a fundamental wave component extraction unit, a second harmonic component extraction unit, a phase calculation unit, and a modulated signal generation unit.

3. An angular velocity measuring method doubly using an atomic wave interferometer that separates an atomic wave by a first Raman beam, reflects the atomic wave by a second Raman beam, and separates again the atomic wave by a third Raman beam to make the atomic wave interfere, the method comprising:
applying to the second Raman beam an offset phase and an oscillation phase having an amplitude β and an angular frequency ω to modulate a phase of the atomic wave;
measuring an intensity signal I_{R} of a first interfered atomic wave by a first number-of-atoms measuring apparatus;
calculating a first observed phase difference Φ_{R} from a ω component and a 2ω component of the intensity signal I_{R} and the amplitude β;
conducting feedback control of the offset phase such that cosΦ_{R} = - 1;
measuring an intensity signal I_{L} of a second interfered atomic wave by a second number-of-atoms measuring apparatus;
calculating a second observed phase difference Φ_{L} from a ω component and a 2ω component of the intensity signal I_{L} and the amplitude β; and
calculating an angular velocity Q from the second observed phase difference Φ_{L}.

4. A gyroscope comprising:
a Raman beam generation unit;
two atomic beam sources;
two number-of-atoms measuring apparatus; and
a signal processing unit, wherein
the Raman beam generation unit includes a laser light source, splitters, frequency shifters, and a modulator, and
the signal processing unit includes two fundamental wave component extraction units, two second harmonic component extraction units, two phase calculation unit, a modulated signal generation unit, and an angular velocity calculation unit.
